# EUROPÄISCHE PATENTSCHRIFT

(11) **EP 1 703 259 B1**
(45) Veröffentlichungstag und Bekanntmachung des Hinweises auf die Patenterteilung: **18.07.2007**
(21) Anmeldenummer: 05004994.9
(22) Anmeldetag: 08.03.2005
(51) Int. Cl.: G01D 5/347, G01B 3/00

(54) **Massverkörperung mit parallelen Massbändern**
Measuring scale with parallel tape measures
Echelle de mesure avec bandes de mesure parallèles

(43) Veröffentlichungstag der Anmeldung: 20.09.2006
(73) Patentinhaber: Bosch Rexroth Mechatronics GmbH, 97424 Schweinfurt (DE)
(72) Erfinder: Ochs, Bernhard, Dr., 96114 Hirschaid-Seigendorf (DE)

(56) Entgegenhaltungen:
- EP-A- 0 624 780
- DE-A1- 19 922 363
- PATENT ABSTRACTS OF JAPAN Bd. 2003, Nr. 10, 8. Oktober 2003 (2003-10-08) & JP 2003 166853 A (MITSUTOYO CORP), 13. Juni 2003 (2003-06-13)

## Beschreibung

Die Erfindung betrifft eine Maßverkörperung für ein Wegmesssystem gemäß dem Oberbegriff von Anspruch 1.

Derartige Maßverkörperungen sind aus der DE 199 22 363 bekannt. Dort ist eine Maßverkörperung gezeigt, die einen Grundkörper 3 aufweist, an dem ein erstes Maßband 29 mit Perforationen 37 befestigt ist.

Der Grundkörper 3 wird von der Führungsschiene einer Linearwälzführung gebildet. Die nicht dargestellte Mittellinie des Maßbandes ist daher eine Gerade. An dem Führungswagen 19 dieser Linearwälzführung ist ein Sensorkopf 31 angeordnet, mit dem das Maßband zur Ermittlung einer Weginformation induktiv abgetastet werden kann. Als Perforationen sind Rechtecke vorgesehen, die sich quer zur Mittellinie des Maßbandes erstrecken und periodisch angeordnet sind. Das Maßband besteht aus Stahl und weist eine Dicke von ca. 0,3 mm. Die Breite der Rechtecke und der Abstand in Längsrichtung beträgt jeweils 0,5 mm, so dass der induktiv arbeitende Sensorkopf Sinus- und Cosinussignale mit einer Periode von 1 mm abgibt. Die Periode des Maßbandes wird durch eine geeignete Spannung bzw. Dehnung desselben exakt eingestellt. Das gedehnte Maßband ist mittels Punktschweißungen am Grundkörper befestigt, wobei es in einer Vertiefung aufgenommen ist, die mit einem Abdeckband 18 verschlossen ist.

Die Perforationen in dem Maßband werden mittels Ätzen hergestellt. Hierzu wird ein flaches unperforiertes Stahlband mit Fotolack beschichtet und mit dem gewünschten Perforationsmuster hochgenau belichtet. Der Fotolack wird anschließend entwickelt, wobei er an den Stellen, an denen die Perforationen vorgesehen sind, abgetragen wird, während er das Stahlband an den übrigen Stellen abdeckt. Dieser Prozess wird auf beiden Seiten das Maßbandes durchgeführt. Durch Eintauchen des vorbehandelten Bandes in eine Ätzflüssigkeit werden die Perforationen chemisch aus dem Band herausgelöst. Hierbei besteht das Problem, dass die Begrenzungsflächen der Perforationen, die in Dickenrichtung des Maßbandes verlaufen, eine unregelmäßige Form aufweisen. Diese Unregelmäßigkeiten hängen sowohl von den Verfahrensbedingungen beim Ätzen wie z.B. der Ätzzeit als auch von der Geometrie des Maßbandes wie dessen Periode und dessen Dicke ab. Diese Unregelmäßigkeiten haben beim induktiven Abtasten des Maßbandes eine verminderte Genauigkeit des gesamten Wegmesssystems zur Folge.

Hieraus ergibt sich ein Zielkonflikt, da die Dicke des Maßbandes einerseits möglichst groß sein soll, um ein möglichst starkes Sensorsignal zu erzeugen, und andererseits möglichst klein, um eine möglichst geringe Unregelmäßigkeit der Perforation zu erhalten. Ein ähnlicher Zielkonflikt existiert in Bezug auf die Periode des Maßbandes. Bei einer kleinen Periode kann der Sonor ein genaueres Messsignal erzeugen, während die Unregelmäßigkeit der Perforationen des Maßbandes zunimmt.

Es ist Aufgabe der Erfindung, eine Maßverkörperung gemäß dem Oberbegriff von Anspruch 1 zu schaffen, deren Maßband möglichst genau und gleichzeitig möglichst dick ist. Diese Aufgabe wird dadurch gelöst, dass wenigstens ein weiteres zum ersten Maßband im Wesentlichen identisches Maßband vorgesehen ist, welches parallel zum ersten Maßband angeordnet ist, wobei die periodischen Perforationen deckungsgleich übereinander liegen. Die beiden Maßbänder wirken somit wie ein einziges Maßband. Dieses effektive Maßband ist so dick wie alle Maßbänder zusammen, aber gleichzeitig so genau wie ein einzelnes Maßband.

Die erfindungsgemäße Maßverkörperung kann hergestellt werden, indem die Maßbänder im spannungslosen Zustand aufeinander geklebt werden. Dies ist aber schwierig, weil die Maßbänder aufgrund ihrer geringen Dicke von vorzugsweise 0,1 mm sehr flexibel sind und die Periode von zwei verschiedenen Maßbändern nie exakt gleich ist. Es wird daher vorgeschlagen, dass die parallelen Maßbänder aus einem einstückigen Rohmaßband gefaltet sind. Das einstückige Rohmaßband weist hierfür mehrere klappsymmetrische Perforationsreihen auf, die durch Faltlinien voneinander getrennt sind. Durch die Faltlinie, die beispielsweise als gerade schmale Nut ausgeführt sein kann, wird der Ort der Faltung genau vorgegeben. Die klappsymmetrischen Perforationen, die auf dem Rohmaßband nebeneinander liegen, werden daher immer genau übereinander liegen, auch wenn die Periode des Rohmaßbandes in Längsrichtung etwas schwankt.

Die Faltlinie kann so ausgeführt sein, dass das Rohmaßband beim Falten in mehrere separate Maßbänder zerbricht. Es kann aber auch daran gedacht sein, die Faltlinie so auszuführen, dass sie wie ein Filmscharnier wirkt. Ein derart gefaltetes Maßband kann anschließend wie ein massives Maßband weiterverarbeitet werden. Entscheidend ist aber in jedem Fall, dass die einzelnen Maßbänder im Bereich der Faltlinie beim Falten nicht verbogen werden. Derartige Deformationen würden sich negativ auf die Parallelität der einzelnen Maßbänder auswirken und damit die Genauigkeit der übergeordneten Messvorrichtung beeinträchtigen.

Bei einer weiteren Ausführungsform können die Maßbänder jeweils so gespannt sein, dass die Perforationen deckungsgleich sind. Eine derartige Maßverkörperung kann wie folgt hergestellt werden:

Das erste Maßband wird wie aus der DE 199 22 363 bekannt so unter Spannung am Grundkörper befestigt, dass es die gewünschte Periode aufweist. Hierzu wird es an einem Ende des Grundkörpers mittels Punktschweißen befestigt. Anschließend wird das Maßband gedehnt, bis es die gewünschte Periode aufweist. Hierzu muss im spannungslosen Zustand die Maßbandperiode etwas kleiner als die Zielperiode sein. Das gespannte Maßband wird dann am gegenüberliegenden Ende des Grundkörpers ebenfalls punktverschweißt.

Das zweite Maßband wird nun wiederum an einem Ende der Maßverkörperung mittels Punktschweißen befestigt. Hierbei ist es vorteilhaft, wenn die Punktschweißung des ersten Maßbandes etwas näher am Grundkörperende ist, als die Punktschweißung des zweiten Maßbandes. Die zweite Punktschweißung wird dann die beiden Maßbänder gemeinsam auf dem Grundkörper fixieren, da diese aufeinander liegen. Zuvor müssen jedoch die Ausnehmungen der beiden Maßbänder zueinander ausgerichtet werden. Dies wird vorzugsweise unter Zuhilfenahme eines Mikroskops geschehen, da eine sehr hohe Ausrichtgenauigkeit angestrebt wird. Als Bezugspunkt für die Ausrichtung dient je eine Ausnehmung der beiden Maßbänder, die möglichst nahe an der zweiten Punktschweißung liegt und zwar auf der Seite der Punktschweißung, die im fertigen Zustand der Maßverkörperung gespannt ist.

Im Anschluss wird das zweite Maßband gespannt, bis alle Perforationen genau deckungsgleich sind. Auch bei diesem Verfahrensschritt wird man sich wieder eines Mikroskops bedienen um zwei Ausnehmungen der beiden Maßbänder, die sich am gegenüberliegenden noch nicht befestigten Ende des zweiten Maßbandes befinden, zueinander auszurichten. Aufgrund der hohen Genauigkeit der geätzten Maßbänder sind dann auch alle übrigen Perforationen im mittleren Bereich der Maßverkörperungen exakt ausgerichtet.

Zuletzt wird auch das zweite Ende des zweiten Maßbandes mit einer Punktschweißung befestigt. Diese Schweißung wird man wiederum an einer Stelle anbringen, an der beide Maßbänder gemeinsam mit dem Grundkörper verschweißt werden können. Auf diese Weise wird gewährleistet, dass sich kleinste Verformungen, die durch die Punktschweißungen in die Maßbänder eingebracht werden, auf beide Maßbänder gleich auswirken, so dass die Perforationen auch weiterhin exakt deckungsgleich sind. Obwohl diese Anordnung der Punktschweißungen relativ zueinander Vorteile verspricht, kann auch jede andere Anordnung vorgesehen werden, sofern sie eine sichere Befestigung der Maßbänder ermöglicht.

Je nach Anwendungsfall können auf diese Weise noch weitere Maßverkörperungen auf den Grundkörper aufgebracht werden. Die optimale Anzahl lässt sich mit einer Rechnersimulation oder mittels Versuch bestimmen. Bei Maßverkörperungen für induktive Messsysteme ist es vorteilhaft, wenn zwischen den aufeinander liegenden Maßbändern elektrischer Kontakt besteht, damit sich die bei der Abtastung entstehenden Wirbelströme ungehindert in dem gesamten Maßbandstapel ausbreiten können. Dieses Ziel kann man am einfachsten dadurch erreichen, dass man gereinigte blanke Stahlmaßbänder unmittelbar aufeinander legt und anschließend verspannt.

An dieser Stelle sei noch darauf hingewiesen, dass das Verfahren zum Abtrennen einer kürzeren Maßverkörperung von einer langen Maßverkörperung gemäß DE 199 22 383 A1 Anspruch 11 und folgende auch bei einer erfindungsgemäßen Maßverkörperung durchführbar ist. Die Mehrzahl von Maßbändern wird bei einer erfindungsgemäßen Maßverkörperung jedoch gemeinsam punktverschweißt.

Weiter ist darauf hinzuweisen, dass sich die Erfindung nicht nur auf Maßbänder mit gerader Mittellinie bezieht. Es kann vielmehr auch daran gedacht sein, das Maßband auf einen Zylinder aufzuwickeln, um über die Wegmessung in Umfangsrichtung eine Winkelinformation zu erhalten. Es kann aber auch ein kreisförmig gebogenes Maßband auf eine ebene Fläche aufgebracht werden, um diese Funktion zu realisieren. Die Perforation der Maßbänder können sowohl periodisch als auch aperiodisch sein. Aperiodische Perforationen finden beispielsweise bei absolut arbeitenden Wegmesssystemen Anwendung, die mit einer Zufallszahlenfolge arbeiten, wie dies in DE 39 10 873 A1 beschrieben ist.

Die Erfindung wird im Folgenden anhand der beigefügten Zeichnungen beschrieben werden. Es stellt dar:
- Fig. 1: eine schematische Ansicht einer erfindungsgemäßen Maßverkörperung;
- Fig. 2: eine Teilschnittansicht der Maßverkörperung gemäß Fig. 1 entlang der Linie A-A; und
- Fig. 3: eine Schnittansicht eines einstückigen Rohmaßbands zur Verwendung in einer erfindungsgemäßen Maßverkörperung.

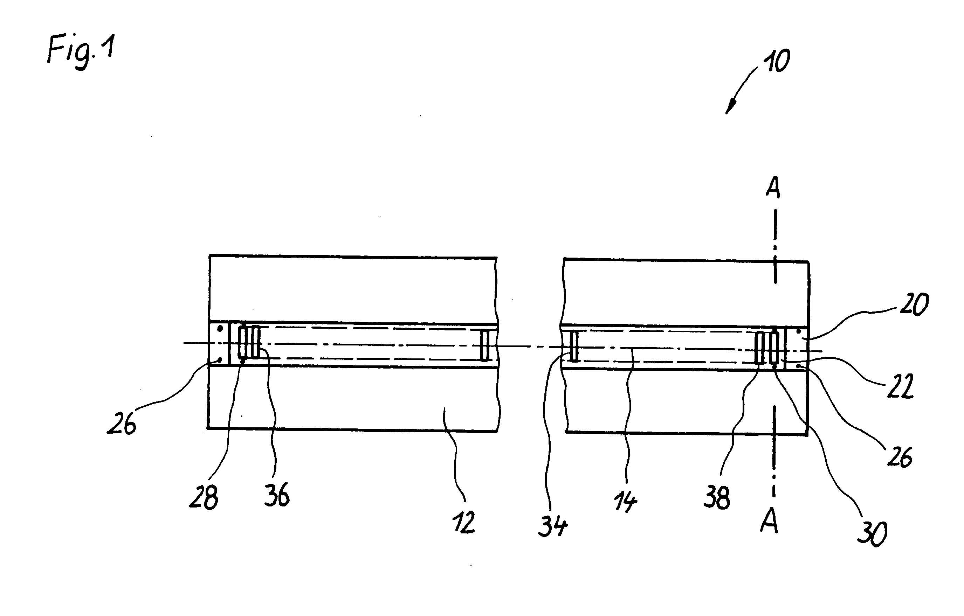

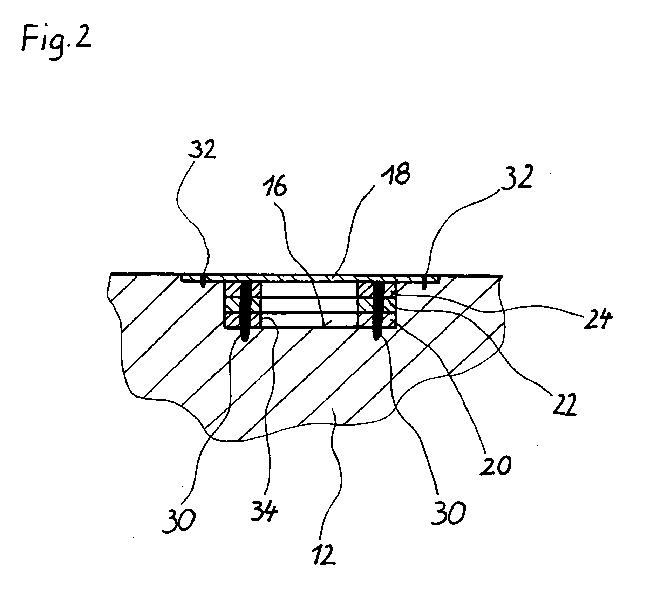

In Fig. 1 ist eine erfindungsgemäße Maßverkörperung allgemein mit 10 bezeichnet. Sie besteht aus einem Grundkörper 12, an dessen Außenseite eine in Fig. 2 dargestellte Vertiefung 16 angebracht ist. Die Vertiefung ist mit einem Abdeckband 18 verschlossen, das mittels zweier Laserschweißnähte 32 mit dem Grundkörper verbunden ist. In Fig. 1 wurde der Übersichtlichkeit wegen auf die Darstellung des Abdeckbandes verzichtet. Bei dem Grundkörper 12 handelt es sich um einen geraden langgestreckten Profilkörper, beispielsweise um die Führungsschiene einer Linearwälzführung.

Unter dem Abdeckband befindet sich ein erstes 20, ein zweites 22 und ein drittes Maßband 24 mit jeweils gerader Mittellinie 14. Die Maßbänder sind bis auf die Länge alle identisch ausgeführt und bestehen aus 0,1 mm dickem Federstahlblech. In die Maßbänder wurden mittels eines Ätzprozesses Perforationen 34 in Form von rechteckigen Ausnehmungen eingebracht, die sich quer zur Längsrichtung des Maßbands erstrecken. Die Ausnehmungen sind jeweils 0,5 mm breit und periodisch entlang der Mittellinie 14 des Maßbandes verteilt, wobei die Periode im spannungslosen Zustand minimal kleiner als 1 mm ist. Die drei Maßbänder 20, 22, 24 liegen unmittelbar aufeinander, so dass sich Wirbelströme, die bei einer induktiven Wegmessung entstehen, ungehindert über den Maßbandstapel ausbreiten können. Die Perforationen 34 der übereinander liegenden Maßbänder 20, 22, 24 liegen jeweils genau deckungsgleich übereinander.

Das erste Maßband 20 ist mit vier ersten Punktschweißverbindungen 26 unter Spannung so am Grundkörper 12 befestigt, dass die Periode der Perforationen exakt 1 mm beträgt. Das zweite Maßband 22 wurde zuerst mit zwei zweiten Punktschweißverbindungen 28 am Grundkörper befestigt. Zuvor wurde es anhand einer ersten Ausrichtperforation 36, die sich unmittelbar neben der zweiten Punktschweißverbindung 28 befindet, unter Zuhilfenahme eines Mikroskops relativ zum ersten Maßband 20 ausgerichtet. Die zweite Punktschweißverbindung 28 durchsetzt beide Maßbänder 20, 22, so dass sie gemeinsam am Grundkörper befestigt sind.

Vor dem Aufbringen der zwei dritten Punktschweißverbindungen 30 wurde das zweite Maßband 22 derart gespannt, dass nunmehr auch die zweiten Ausrichtperforationen 38 der beiden Maßbänder exakt übereinander liegen. Die zweiten Ausrichtperforationen 38 befinden sich unmittelbar neben den dritten Punktschweißverbindungen 30 und zwar ebenso wie die erste Ausrichtperforation 36 im gespannten Bereich der Maßbänder.

Auf die Darstellung des dritten Maßbandes 24 wurde in Fig. 1 verzichtet. Die Montage dieses Maßbands läuft analog zum zweiten Maßband 22 ab, wobei die entsprechenden zusätzlichen Punktschweißverbindungen wieder etwas zur Mitte der Maßverkörperung hin versetzt sind, weil es nachteilig ist, mehrere Schweißpunkte an derselben Stelle zu setzen.

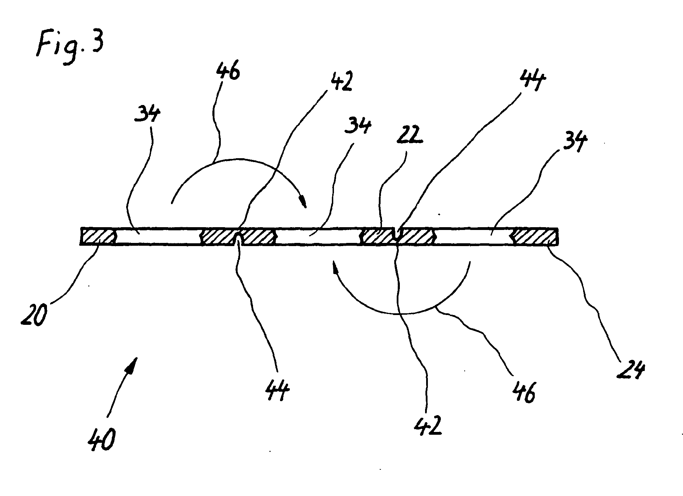

In Fig. 3 ist ein einstückiges Rohmaßband 40 dargestellt, aus dem die parallelen Maßbänder 20, 22, 24 gefaltet werden können. Hierfür weist das Rohmaßband 40 zwei Faltlinien 42 auf die als gerade Nuten 44 ausgeführt sind. Die Nuten 44 sind an gegenüberliegenden Seiten des Rohmaßbandes 40 angebracht, damit es ziehharmonikaartig zusammengefaltet werden kann, und zwar in Richtung der Faltpfeile 46. Dabei wird das Rohmaßband 40 aus Federstahl regelmäßig auseinander brechen, so dass die einzelnen Maßbänder wie oben beschrieben montiert werden können.

Die Nuten 44 werden zusammen mit den Perforationen 40 in einem Ätzprozess hergestellt, so dass die Perforationen 40 exakt klappsymmetrisch zu den Faltlinien angeordnet sind. Damit beim Ätzen eine Nut entsteht muss das Rohmaßband 40 auf einer Seite mit Fotolack ganz abgedeckt sein, während auf der anderen Seite eine Öffnung im Fotolack vorgesehen ist, deren Breite der Nutbreite entspricht. Die Tiefe der Nut kann über die Ätzdauer eingestellt werden. Die U-Querschnittsform der Nut ist durch den Ätzprozess im Wesentlichen vorgegeben.

### Bezuaszeichenliste

- 10: Maßverkörperung
- 12: Grundkörper
- 14: Mittellinie
- 16: Vertiefung
- 18: Abdeckband
- 20: erstes Maßband
- 22: zweites Maßband
- 24: drittes Maßband
- 26: erste Punktschweißverbindung
- 28: zweite Punktschweißverbindung
- 30: dritte Punktschweißverbindung
- 32: Laserschweißnaht
- 34: Perforation
- 36: erste Ausrichtperforation
- 38: zweite Ausrichtperforation
- 40: einstückiges Rohmaßband
- 42: Faltlinie
- 44: gerade Nut
- 46: Faltpfeil

## Patentansprüche

1. Maßverkörperung (10) für ein Wegmesssystem umfassend einen Grundkörper (12) und
ein erstes Maßband (20) mit einer Mittellinie (14) und Perforationen (34), welches am Grundkörper (12) befestigt ist,
**dadurch gekennzeichnet, dass** wenigstens ein weiteres zum ersten Maßband im Wesentlichen identisches Maßband (22; 24) vorgesehen ist, welches parallel zum ersten Maßband (20) angeordnet ist, wobei die Perforationen (34) aller Maßbänder (20; 22) deckungsgleich übereinander liegen.

2. Maßverkörperung nach Anspruch 1,
**dadurch gekennzeichnet, dass** die Perforationen (34) der Maßbänder (20; 22; 24) mittels Ätzen hergestellt sind.

3. Maßverkörperung nach einem der vorherigen Ansprüche,
**dadurch gekennzeichnet, dass** die Maßbänder (20; 22; 24) jeweils so gespannt sind, dass die Perforationen (34) deckungsgleich sind.

4. Maßverkörperung nach einem der vorherigen Ansprüche,
**dadurch gekennzeichnet, dass** die Maßbänder (20; 22; 24) elektrisch leitend miteinander verbunden sind.

5. Maßverkörperung nach einem der vorherigen Ansprüche,
**dadurch gekennzeichnet, dass** die Maßbänder (20; 22; 24) unmittelbar aufeinander liegen.

6. Maßverkörperung nach einem der vorherigen Ansprüche,
**dadurch gekennzeichnet, dass** wenigstens eine Punktschweißverbindung (28) vorgesehen ist mit der alle Maßbänder (20; 22; 24) gemeinsam am Grundkörper (14) befestigt sind.

7. Maßverkörperung nach einem der vorherigen Ansprüche,
**dadurch gekennzeichnet, dass** die Perforationen (34) rechteckige Ausschnitte sind, die sich quer zur Mittellinie (14) der Maßbänder (20; 22; 24) erstrecken und periodisch angeordnet sind.

8. Maßverkörperung nach einem der vorherigen Ansprüche,
**dadurch gekennzeichnet, dass** die Maßbänder (20; 22; 24) in einer Vertiefung (16) des Grundkörpers (12) angeordnet sind, die mit einem Abdeckband (18) verschlossen ist.

9. Maßverkörperung nach einem der vorherigen Ansprüche,
**dadurch gekennzeichnet, dass** die Maßbänder (20; 22; 24) etwa 0,1 mm dick sind und aus Federstahl bestehen.

10. Maßverkörperung nach einem der vorherigen Ansprüche,
**dadurch gekennzeichnet, dass** der Grundkörper (12) von der Führungsschiene einer Linearwälzführung gebildet wird, wobei die Mittellinie (14) der Maßbänder (20; 22; 24) gerade ist.

11. Maßverkörperung nach einem der vorherigen Ansprüche,
**dadurch gekennzeichnet, dass** die parallelen Maßbänder (20; 22; 24) aus einem einstückigen Rohmaßband (40) gefaltet sind.

12. Maßverkörperung nach Anspruch 11,
**dadurch gekennzeichnet, dass** an dem Rohmaßband (40) wenigstens eine Faltlinie (42), vorzugsweise wenigstens eine gerade Nut (44), angebracht ist, wobei die Perforationen (34) klappsymmetrisch zu der wenigstens einen Faltlinie (42) angeordnet sind.

13. Maßverkörperung nach Anspruch 12,
**dadurch gekennzeichnet, dass** das Rohmaßband (40) beim Falten an der wenigstens einen Faltlinie (42) auseinander bricht.

14. Maßverkörperung nach Anspruch 12,
**dadurch gekennzeichnet, dass** die wenigstens eine Faltlinie (42) als Filmscharnier wirkt.

15. Maßverkörperung nach einem der Ansprüche 12 bis 14,
**dadurch gekennzeichnet, dass** wenigstens zwei Faltlinien (42) vorgesehen sind, die jeweils als gerade Nut (44) ausgeführt sind, wobei benachbarte Nuten an gegenüberliegen Seiten des Rohmaßbandes (40) angeordnet sind.

16. Verfahren zur Herstellung einer Maßverkörperung nach einem der vorherigen Ansprüche umfassen die Schritte:
- Befestigen des ersten Maßbandes (20) an einem Ende des Grundkörpers (12);
- Spannen des ersten Maßbandes (20), so dass dessen Perforationen (34) einen vorbestimmten Abstand aufweisen,
- Befestigen des ersten Maßbandes (20) am gegenüberliegenden Ende des Grundkörpers (12);
- Befestigen eines weiteren Maßbandes (22; 24) an einem Ende des Grundkörpers, so dass die Perforationen (34) aller Maßverkörperungen (20; 22; 24) an diesem Ende deckungsgleich übereinander liegen;
- Spannen des weiteren Maßbandes (22; 24), so dass alle Perforationen (34) aller Maßverkörperungen (20; 22; 24) deckungsgleich übereinander liegen;
- Befestigen des weiteren Maßbandes (20; 24) am gegenüberliegenden Ende des Grundkörpers (12).

17. Verfahren nach Anspruch 16,
**dadurch gekennzeichnet, dass** das Ausrichten der Perforationen (34) aller Maßbänder (20; 22; 24) unter Zuhilfenahme eines Mikroskops vorgenommen wird.

## Claims

1. Measuring scale (10) for a distance measuring system, said scale comprising a
base body (12) and
a first tape measure (20) which has a centre line (14) and perforations (34) and is fastened to the base body (12),
**characterized in that** at least one further tape measure (22; 24) which is essentially identical to the first tape measure and is arranged parallel to the first tape measure (20) is provided, the perforations (34) of all tape measures (20; 22) lying above one another such that they are congruent.

2. Measuring scale according to Claim 1,
**characterized in that** the perforations (34) of the tape measures (20; 22; 24) are produced using etching.

3. Measuring scale according to one of the preceding claims,
**characterized in that** the tape measures (20; 22; 24) are each tensioned in such a manner that the perforations (34) are congruent.

4. Measuring scale according to one of the preceding claims,
**characterized in that** the tape measures (20; 22; 24) are electrically conductively connected to one another.

5. Measuring scale according to one of the preceding claims,
**characterized in that** the tape measures (20; 22; 24) lie directly on one another.

6. Measuring scale according to one of the preceding claims,
**characterized in that** provision is made of at least one spot welding connection (28) which is used to jointly fasten all of the tape measures (20; 22; 24) to the base body (12).

7. Measuring scale according to one of the preceding claims,
**characterized in that** the perforations (34) are rectangular cutouts which extend transversely to the centre line (14) of the tape measures (20; 22; 24) and are arranged periodically.

8. Measuring scale according to one of the preceding claims,
**characterized in that** the tape measures (20; 22; 24) are arranged in a depression (16) of the base body (12), said depression being closed with a covering strip (18).

9. Measuring scale according to one of the preceding claims,
**characterized in that** the tape measures (20; 22; 24) are approximately 0.1 mm thick and comprise spring steel.

10. Measuring scale according to one of the preceding claims,
**characterized in that** the base body (12) is formed by the guide rail of a linear rolling guide, the centre line (14) of the tape measures (20; 22; 24) being straight.

11. Measuring scale according to one of the preceding claims,
**characterized in that** the parallel tape measures (20; 22; 24) are folded from an integral crude tape measure (40).

12. Measuring scale according to Claim 11,
**characterized in that** at least one fold line (42), preferably at least one straight groove (44), is made in the crude tape measure (40), the perforations (34) being arranged such that they are mirror-symmetrical to the at least one fold line (42).

13. Measuring scale according to Claim 12,
**characterized in that** the crude tape measure (40) breaks in two during folding along the at least one fold line (42).

14. Measuring scale according to Claim 12,
**characterized in that** the at least one fold line (42) acts as a film hinge.

15. Measuring scale according to one of Claims 12 to 14,
**characterized in that** provision is made of at least two fold lines (42) which are each in the form of a straight groove (44), adjacent grooves being arranged on opposite sides of the crude tape measure (40).

16. Method for producing a measuring scale according to one of the preceding claims, said method comprising the steps of:
- fastening the first tape measure (20) to one end of the base body (12);
- tensioning the first tape measure (20) such that its perforations (34) are at a predetermined distance;
- fastening the first tape measure (20) to the opposite end of the base body (12);
- fastening a further tape measure (22; 24) to one end of the base body such that the perforations (34) of all measuring scales (20; 22; 24) lie above one another such that they are congruent at this end;
- tensioning the further tape measure (22; 24) such that all perforations (34) of all measuring scales (20; 22; 24) lie above one another such that they are congruent;
- fastening the further tape measure (20; 24) to the opposite end of the base body (12).

17. Method according to Claim 16,
**characterized in that** the perforations (34) of all tape measures (20; 22; 24) are aligned with the aid of a microscope.

## Revendications

1. Echelle de mesure (10) pour un système de mesure de déplacement comprenant un corps de base (12) et une première bande de mesure (20) fixée sur le corps de base (12), et ayant une ligne médiane (14) et des perforations (34),
**caractérisée par**
au moins une autre bande de mesure (22, 24) pratiquement identique à la première et parallèle à celle-ci, les perforations (34) de toutes les bandes de mesure (20 ; 22) se recouvrant exactement.

2. Echelle de mesure selon la revendication 1,
**caractérisée en ce que**
les perforations (34) des bandes de mesure (20 ; 22 ; 24) sont réalisées par gravure.

3. Echelle de mesure selon une des revendications précédentes,
**caractérisée en ce que**
les bandes de mesure (20 ; 22 ; 24) sont chacune tendues pour que les perforations (34) coïncident.

4. Echelle de mesure selon une des revendications précédentes,
**caractérisée en ce que**
les bandes de mesure (20 ; 22 ; 24) sont reliées entre elles avec conductibilité électrique.

5. Echelle de mesure selon une des revendications précédentes,
**caractérisée en ce que**
les bandes de mesure (20 ; 22 ; 24) sont appliquées directement les unes sur les autres.

6. Echelle de mesure selon une des revendications précédentes,
**caractérisée en ce qu'**
au moins une liaison par des points de soudure (28), assurant la fixe de toutes les bandes de mesure (20 ; 22 ; 24) en commun sur le corps de base (14).

7. Echelle de mesure selon une des revendications précédentes,
**caractérisée en ce que**
les perforations (34) sont des découpes rectangulaires, perpendiculaires à la ligne médiane (14) des bandes de mesure (20 ; 22 ; 24) et disposées périodiquement.

8. Echelle de mesure selon une des revendications précédentes,
**caractérisée en ce que**
les bandes de mesure (20 ; 22 ; 24) sont disposées dans une cavité (16) du corps de base (12), obturée par une bande de couverture (18).

9. Echelle de mesure selon une des revendications précédentes,
**caractérisée en ce que**
les bandes de mesure (20 ; 22 ; 24) sont en acier à ressort ayant une épaisseur de 0,1 mm environ

10. Echelle de mesure selon une des revendications précédentes,
**caractérisée en ce que**
le corps de base (12) est le rail d'un guidage linéaire à galets, dont la ligne médiane (14) des bandes de mesure (20 ; 22 ; 24) est droite.

11. Echelle de mesure selon une des revendications précédentes,
**caractérisée en ce que**
les bandes de mesure (20 ; 22 ; 24) parallèles sont obtenues par pliage d'une ébauche de bande de mesure (40) réalisée d'une seule pièce.

12. Echelle de mesure selon la revendication 11,
**caractérisée en ce que**
sur l'ébauche de bande de mesure (40), au moins une ligne de pliage (42) est réalisée de préférence comme une rainure rectiligne (44), et les perforations (34) sont disposées symétriquement par rapport à l'au moins une ligne de pliage (42).

13. Echelle de mesure selon la revendication 12,
**caractérisée en ce que**
l'ébauche de bande de mesure (40) se sépare par fracture quand on la plie le long d'au moins une ligne de pliage (42).

14. Echelle de mesure selon la revendication 12,
**caractérisée en ce que**
la ligne de pliage (42) agit comme un film charnière.

15. Echelle de mesure selon une des revendications 12 à 14,
**caractérisée par**
au moins deux lignes de pliage (42) constituées chacune par une rainure rectiligne (44), les rainures étant voisines sur les faces opposées de l'ébauche de bande de mesure (40).

16. Procédé pour fabriquer une échelle de mesure selon une des revendications précédentes, qui comporte les étapes suivantes :
- fixation de la première bande de mesure (20) à l'extrémité du corps de base (12) ;
- mise sous tension de la première bande de mesure (20) de manière que ses perforations (34) présentent un espacement prédéfini ;
- fixation de la première bande de mesure (20) à l'extrémité opposée du corps de base (12) ;
- fixation d'une autre bande de mesure (22 ; 24) à une extrémité du corps de base, de manière que les perforations (34) de toutes les échelles de mesure (20 ; 22 ; 24), se superposent exactement à cette extrémité ;
- mise sous tension de l'autre bande de mesure (22 ; 24) de sorte que toutes les perforations (34) de toutes les échelles de mesure (20 ; 22 ; 24) se superposent exactement ;
- fixation de l'autre bande de mesure (22 ; 24) à l'extrémité opposée du corps de base (12).

17. Procédé selon la revendication 16,
**caractérisé en ce que**
le positionnement des perforations (34) de toutes les bandes de mesure (20 ; 22 ; 24) s'effectue à l'aide d'un microscope.
